(19) Europäisches Patentamt
European Patent Office
Office européen des brevets

(11) Numéro de publication : **0 023 869**
**B1**

(12) **FASCICULE DE BREVET EUROPÉEN**

(45) Date de publication du fascicule du brevet : **08.02.84**

(51) Int. Cl.³ : **C 04 B 35/58**, C 01 B 21/068, C 01 B 21/082

(21) Numéro de dépôt : **80401135.1**

(22) Date de dépôt : **31.07.80**

(54) **Procédé de préparation de sialons.**

(30) Priorité : **03.08.79 FR 7919986**

(43) Date de publication de la demande : **11.02.81 Bulletin 81/06**

(45) Mention de la délivrance du brevet : **08.02.84 Bulletin 84/06**

(84) Etats contractants désignés : **AT BE CH DE FR GB IT LI LU NL SE**

(56) Documents cités :
**FR-A- 1 456 005**
**FR-A- 2 353 503**
**US-A- 3 960 581**
**US-A- 3 991 166**
**AMERICAN CERAMIC SOCIETY BULLETIN, vol. 55, no. 4, avril 1976, Columbus, Ohio, US, J.G. LEE et al.: "Sialon, Silicon Carbide and Aluminium Nitride Derived from Clay", page 390**
**CHEMICAL ABSTRACTS, vol. 88, no. 16, 17 avril 1978, abrégé no. 109422g, page 261, Columbus, Ohio, US, K. SHIMADA et al.: "Nitrides formed from shirasu glass by a carbon reduction process"**
**AMERICAN CERAMIC SOCIETY BULLETIN, vol. 58, no. 9, septembre 1979, Columbus, Ohio, US, J.G. LEE et al.: "Sinterable sialon powder by reaction of clay with carbon and nitrogen", pages 869-871**

(73) Titulaire : **SOCIETE EUROPEENNE DES PRODUITS REFRACTAIRES**
**67, Boulevard du Château**
**F-92200 Neuilly-sur-Seine (FR)**

(72) Inventeur : **Paris, René Antoine**
**152, Cours Gambetta**
**F-69007 Lyon (FR)**
Inventeur : **Grollier-Baron, Thérèse**
**46 lotissement "Les Sabines"**
**F-69130 Ecully (FR)**

(74) Mandataire : **De Boisse, Louis et al**
**37, Avenue Franklin D. Roosevelt**
**F-75008 Paris (FR)**

**EP 0 023 869 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de préparation de sialons

L'invention se rapporte aux « sialons », c'est-à-dire aux solutions solides homogènes du système Si-Al-O-N, et elle concerne plus particulièrement un procédé de préparation de sialons β'.

Depuis une quinzaine d'années de nombreux travaux ont montré l'intérêt du nitrure de silicium comme matériau réfractaire, résistant à la fois aux températures élevées et à la corrosion de très nombreux agents chimiques. La difficulté principale dans la mise en forme d'un tel composé par pressage à chaud c'est qu'il ne se laisse pas compacter à l'état pur mais qu'il faut lui ajouter une certaine quantité d'un oxyde tel que MgO, formant une phase vitreuse au cours du pressage à chaud. En 1972, un progrès important a été accompli dans la préparation de produits céramiques à base de nitrure de silicium en soumettant au pressage à chaud des mélanges de ce nitrure avec de l'alumine grâce à la possibilité de formation d'une solution solide entre ces deux constituants dans un large domaine de composition de 0 à 60 moles % d'$Al_2O_3$).

En réalité, d'après les publications parues récemment, en particulier celles de L. J. Gauckler, H. L. Lucas et G. Petzow — J. Amer. Ceram. Soc. 58-346 (1975) et K. H. Jack J. Mat. Sci. 11-1135 (1976), les solutions solides homogènes qui peuvent se former dans le système Si-Al-O-N sont relativement nombreuses et correspondent à des compositions et des structures variées. Parmi celles-ci, les produits obtenus par réaction de nitrure de silicium $Si_3N_4$ avec le nitrure d'aluminium AlN et l'alumine $Al_2O_3$, en proportions équimolaires, c'est-à-dire, $Al_3NO_3$ constituant des cristaux homogènes de formule générale $Si_{6-Z}Al_ZO_ZN_{8-Z}$ de même structure que le nitrure de silicium β et que l'on désigne habituellement sous le nom de sialon β'. Le domaine d'existence d'une telle solution solide est relativement important puisque la valeur de Z peut varier pratiquement et de façon continue de 0 à 4,2 environ. Etant donné la bonne aptitude au frittage, avec ou sans pression, de ces sialons β' et en raison des très intéressantes caractéristiques des matières céramiques ainsi obtenues (réfractarité, résistance à chaud, résistance à la corrosion, à l'oxydation, etc.) on conçoit que de très nombreuses études leur aient été consacrées depuis quelques années. Ce qui semble cependant limiter les possibilités d'application d'un tel matériau c'est son prix de revient actuel. Ce prix de revient est élevé d'une part en raison du coût des matières premières utilisées, nitrures de silicium et d'aluminium surtout et d'autre part en raison du coût de l'opération de frittage destinée à former la solution solide par réaction des phases entre elles. L'opération de frittage peut être réalisée en soumettant un mélange intime des poudres de granulométrie appropriée à un pressage sous 200 à 250 kg/cm$^2$ à des températures comprises entre 1 600 et 1 750 °C pendant 30 à 60 minutes.

Cette technique de pressage à chaud, à la fois coûteuse et peu appropriée à la fabrication de pièces de formes compliquées, peut être remplacée par une technique de frittage sans pression, plus économique, qui consiste à compacter d'abord le mélange de poudres à froid, sous une pression de 7 T/cm$^2$ par exemple et à porter ensuite le produit compacté entre 1 750 et 1 780 °C pendant 2 heures en atmosphère d'azote.

Dans le dessein de produire des sialons β' de façon plus économique que par les techniques qui viennent d'être exposées, des auteurs ont proposé de faire appel à des matières premières moins coûteuses que les nitrures, en soumettant à une réaction de nitruration un silicate d'aluminium naturel ou synthétique.

C'est ainsi que dans une publication récente [J. Mat. Sci. 11-P. 1972 (1976)] S. Wild fait état de l'obtention de poudres de sialon β' en nitrurant, par un mélange d'ammoniac et d'hydrogène, une poudre finement divisée et de grande surface spécifique de métakaolin obtenue par déshydratation à 500 °C de kaolin. Le produit formé après 24 heures de traitement à 1 400 °C est constitué par un mélange de sialon β' et de nitrure d'aluminium AlN. Ce dernier peut être éliminé en traitant la poudre par une solution de soude NaOH à 2,5 % pendant 30 minutes à 60 °C. Une telle méthode est limitée à la production de faibles quantités de poudre de sialon (0,2 g environ par expérience) en raison de la difficulté de contact satisfaisant entre le gaz nitrurant (ammoniac) et les grains de poudre. D'autre part, ce procédé de nitruration du métakaolin par l'ammoniac ou les mélanges $NH_3/H_2$ ne permet d'obtenir que des sialons β' pauvres en Al ($Z < 1{,}83$). Considérant le rapport Si/Al dans le kaolin de départ qui devrait conduire à $Z = 3$, on en déduit qu'une forte proportion d'aluminium se retrouve dans le produit final à l'état de nitrure AlN, ce qui nécessite le traitement d'épuration du sialon par la soude comme indiqué plus haut.

Antérieurement à la publication de Wild, le brevet US-A-3 960 581 déposé par Ivan B. Cutler faisait état de la production de sialon à partir d'argile. En fait, dans les expériences décrites pour illustrer cette invention et qui consistent à nitrurer par de l'azote en présence de carbone, soit de l'écorce de riz (source de silice) et du chlorure d'aluminium hydraté (source d'alumine), soit de l'argile expansée par de la mousse de polyuréthane, soit des silicates d'alumine coprécipités, on obtient finalement une « dispersion intime » d'alumine et de nitrure de silicium, car les durées indiquées pour l'étape de nitruration (3 à 4 heures) sont trop courtes pour que se forme la véritable solution solide entre les deux phases, c'est-à-dire la phase homogène qualifiée dans la présente demande de sialon β'.

A la suite de ce brevet, MM. J. G. Lee, R. Casarini et I. B. Cutler ont présenté à la réunion du 3 octobre 1975 de l'American Ceramic Society, une communication consacrée à l'obtention du sialon à

partir de l'argile ; suivant ces auteurs, la nitruration de l'argile en présence de carbone, s'effectue en atmosphère d'azote à 1 450 °C en présence de fer comme catalyseur. La poudre obtenue, pressée et frittée en atmosphère d'azote (1 heure à 1 550-1 650 °C) conduit à des produits compacts dont la densité est fonction de la température de frittage (3,01 pour 1 550 °C ; 3,03 pour 1 600 °C ; 3,14 pour 1 650 °C). Ces produits difficiles à polir, révèlent, à l'analyse métallographique, une dispersion de ferrosilicium en quantité relativement importante dans la solution solide recherchée. Il est à noter que, dans ces expériences où, d'après la mesure de la perte de poids, la nitruration serait totale à 1 450 °C en moins d'une heure, il est vraisemblable qu'au bout d'un temps si court la solution solide sialon n'est pas plus formée que dans celles relatées dans le brevet Cutler et qu'il s'agit encore « d'une dispersion intime » d'alumine et de nitrure de silicium.

L'état actuel de la technique de fabrication de sialons à partir de kaolin ou d'argiles kaolinitiques présente un certain nombre d'inconvénients.

1. D'après les publications citées plus haut, il apparaît qu'aucune des techniques proposées ne permet d'obtenir la solution solide sialon à l'état de phase pure. Les poudres hétérogènes obtenues suivant le procédé Wild contiennent, à côté de la solution solide relativement pauvre en alumine, une quantité importante de nitrure d'aluminium.

Quant aux opérations décrites dans les travaux de Cutler et Coll, elles conduisent à des dispersions de nitrure de silicium et d'alumine, qui ne sont pas des sialons β'. Ces produits frittés contiennent, en outre, une phase de ferrosilicium lorsque la réaction de nitruration a été catalysée par du fer.

2. L'opération de nitruration effectuée sur produits pulvérulents se prête très difficilement à une transposition à l'échelle industrielle. Réalisable en effet sur une couche de poudre de faible épaisseur pour que tous les grains puissent être en contact avec la phase gazeuse qui constitue l'agent de nitruration, elle devient impossible sur une masse importante de poudre dont seule une faible portion superficielle est au contact de la phase gazeuse. La solution du lit fluidisé qui permettrait un brassage suffisant de l'ensemble de la poudre par le gaz nitrurant apparaît à l'homme de l'art d'une application particulièrement difficile étant donnée la température à laquelle s'effectue la nitruration.

La présente invention a pour but de fournir un nouveau procédé de fabrication de sialons β' présentant vis-à-vis des procédés antérieurement décrits le double avantage de ne mettre en œuvre que des matières premières très bon marché et des conditions opératoires simples et économiques, et d'autre part de pouvoir être réalisé sur des quantités de matières aussi importantes qu'on le désire, c'est-à-dire se prêtant très bien à une transposition à l'échelle d'une production industrielle.

Plus précisément, l'invention concerne un procédé de préparation d'un produit comprenant une solution solide d'oxyde d'aluminium dans du nitrure de silicium par chauffage sous atmosphère d'azote à des températures comprises dans la gamme de 1 400 à 1 600 °C, d'une matière contenant de la silice et de l'alumine, mélangée à du carbone ou à une matière carbonée, jusqu'à obtention de ladite solution solide, caractérisé en ce que :

a) on forme une pâte comprenant un matériau silico-alumineux et, soit (i) du carbone et un agent porogène constitué de fines particules d'une matière ligneuse, soit (ii) du carbone très poreux servant à la fois de source de carbone et d'agent porogène,

b) on conforme la pâte obtenue dans l'étape (a) en éléments conformés,

c) on sèche les éléments conformés produits dans l'étape (b) et

d) on chauffe les éléments conformés séchés résultant de l'étape (c) sous atmosphère d'azote aux températures susmentionnées et pendant une durée suffisante pour former un produit sialon β' contenant, comme seule phase cristalline présente en une proportion supérieure à 1 % en poids, une solution solide de type sialon β' répondant à la formule $Si_{6-Z}Al_ZN_{8-Z}O_Z$ où Z = 1 à 4.

La durée de chauffage nécessaire pour obtenir le produit de l'invention variera bien sûr en fonction de la température appliquée, la durée étant d'autant plus courte que la température est élevée. En général, la durée de chauffage sera comprise entre 9 et 25 heures environ.

Le matériau silico-alumineux peut être un silicate d'alumine synthétique ou naturel tel que le kaolin, une argile, une pyrophillite, etc. Un mélange intime de tels matériaux peut être également utilisé.

Ce matériau silico-alumineux devra être utilisé sous la forme d'une poudre fine, d'une surface spécifique d'au moins 5 $m^2/g$, de préférence comprise entre 5 et 50 $m^2/g$, de façon à présenter une réactivité suffisante.

L'argile kaolinitique, en tant que silicate d'alumine naturel, est le matériau préféré à plusieurs points de vue : c'est d'abord un produit très bon marché, facile à obtenir à l'état de poudre à grande surface et très réactive. Cette argile a l'énorme avantage de former avec l'eau une pâte plastique permettant de réaliser, avec les ajouts mentionnés plus haut, des masses agglomérées qui conservent, après séchage et pendant toute l'opération de nitruration, une très bonne tenue mécanique. En outre, certaines impuretés de l'argile, le fer en particulier, ont une action favorable sur la réaction de nitruration. Ces impuretés, en quantité relativement faible pour certains types d'argiles, s'éliminent au cours de la réaction de nitruration (cas des alcalins) ou demeurent en solution dans le produit formé. L'argile kaolinitique, dont il existe de nombreuses variétés, donne des sialons β' de la formule générale indiquée dans laquelle Z = 2 à 3.

Pour la grande majorité des applications des sialons de l'invention en tant que matériaux réfractaires ou constituants de matériaux réfractaires, cette faible quantité d'impuretés demeure sans inconvénient

notable. Au contraire, elle présente souvent l'avantage de faciliter les opérations de frittage. Leur influence défavorable se manifestant cependant sur certaines caractéristiques des produits frittés, il convient d'en limiter la teneur en choisissant les matières premières les plus pures lorsqu'on destine ces sialons frittés à des applications particulièrement exigentes.

Le kaolin, silicate d'alumine plus pur, mais plus cher que l'argile conduira naturellement à des produits nitrurés contenant moins d'impuretés que ceux obtenus à partir d'argile. Toutefois, il convient de souligner que le kaolin se prête moins facilement que l'argile à la fabrication de pâtes plastiques et il en résulte que les agglomérés à base de kaolin ont une tenue mécanique médiocre qui rend plus délicate leur manipulation au cours des opérations de séchage et de nitruration. C'est là un inconvénient sérieux lorsqu'il s'agit d'opérer, dans une fabrication industrielle, sur des masses importantes de produit.

Outre le kaolin et l'argile kaolinitique dont il existe de nombreuses variétés et qui conduira d'autant plus facilement à la solution solide recherchée que sa réactivité sera plus grande (réactivité qui peut être appréciée par la surface spécifique de la poudre) on peut utiliser aussi des matériaux silico-alumineux naturels ou synthétiques comportant d'autres rapports Si/Al afin d'obtenir des solutions solides présentant des formules avec des valeurs de Z différentes. En particulier, une pyrophyllite de formule $Al_2Si_4O_{10}(OH)_2$ qui contient deux fois plus de silice que l'argile kaolinitique permettra d'obtenir un sialon dont la valeur de Z est égale à 2, suivant l'équation de nitruration :

$$Al_2Si_4O_{10}(OH)_2 + 9\ C + 3\ N_2 \longrightarrow Si_4Al_2N_6O_2 + 9\ CO + H_2O.$$

Le traitement de nitruration, réalisé sur les très nombreux matériaux naturels, abondants et bon marché, pourra conduire à des phases de compositions très diverses répondant à des applications également diversifiées. Les propriétés de ces « sialons impurs » sont en effet modifiées par les éléments métalliques qu'apportent les silico-alumineux de départ (alcalino-terreux, métaux lourds). Dans cette généralisation du procédé, il faut cependant faire remarquer qu'il n'est jamais possible de prévoir rigoureusement le résultat de la nitruration d'un matériau donné en se basant simplement sur la composition de ce matériau. L'action de l'azote, en présence de carbone sur les silicates d'alumine constitue un phénomène complexe, comprenant plusieurs réactions successives et des composés intermédiaires qui dépendent à la fois de la composition et de la structure du matériau de départ et des conditions dans lesquelles s'effectue l'opération de nitruration. Seule l'expérimentation est capable de répondre à la question de savoir ce que l'on obtient en soumettant un matériau donné à un traitement de nitruration dans des conditions données.

C'est ainsi, par exemple, qu'on observera (exemples 12 et 13 ci-après) qu'un mélange intime de silice et d'alumine, dans un rapport identique à celui de l'argile kaolinitique de l'exemple 1 et nitruré dans les mêmes conditions que cette dernière conduit à un système polyphasé comportant du sialon β', du corindon et éventuellement de l'oxynitrure de silicium. Une telle observation fait nettement ressortir le résultat inattendu et tout-à-fait imprévisible que l'on observe dans la nitruration de l'argile : cette dernière permet d'obtenir plus facilement le sialon β' exempt de corindon et d'oxynitrure de silicium que le mélange silice/alumine. La raison de cette différence de comportement peut être attribuée aux impuretés favorables à la nitruration que contient l'argile, à son état de très grande finesse donc de grande réactivité et enfin, au fait que le silicate d'alumine qui constitue l'argile réagit différemment du mélange silice/alumine non combinées.

Le carbone utilisé pour la fabrication des agglomérés soumis à la nitruration sera, de préférence, un carbone pur et de grande surface spécifique, avantageusement supérieure à 500 $m^2/g$, donc de réactivité importante, que l'on désigne sous le nom de noir de carbone, dans sa qualité la plus courante et la moins chère.

La demanderesse a constaté que l'on peut utiliser également du charbon de bois ou tout autre forme de carbone même plus ou moins graphité, à condition de les avoir réduit par broyage à l'état de poudre très fine. Si de tels carbones sont plus économiques que le noir de carbone, ils ont par contre l'inconvénient d'être moins réactifs et plus riches en impuretés minérales qui se retrouvent dans le produit fini.

L'agent porogène que l'on incorpore à la matière silicoalumineuse et au carbone pour former la pâte est formé par de fines particules d'une matière ligneuse. Cet agent porogène sera éliminé de l'aggloméré obtenu par séchage de la pâte, lors du chauffage dudit aggloméré à haute température, ce qui donnera lieu à la formation d'une porosité ouverte dans ledit aggloméré permettant à l'azote de venir en contact avec toute la masse de l'aggloméré et d'obtenir ainsi une nitruration homogène et efficace. Par l'expression « fines particules », on veut dire des particules d'une grosseur inférieure à 1 mm, de préférence comprise dans la gamme de 100 microns à 1 mm.

Comme matériaux ligneux utiles aux fins de l'invention, il faut signaler tout d'abord la sciure de bois qui a l'avantage d'être un résidu très bon marché, qui se laisse relativement bien incorporer aux masses plastiques à base d'argile. On a également trouvé qu'une poudre fine résultant du broyage poussé de noyaux d'olives donne également d'excellents résultats avec cet avantage sur la sciure de bois, qu'une incorporation homogène de cette poudre à la masse d'argile est encore plus facile.

La proportion de cet agent porogène éliminable à chaud doit être choisie de façon que tous les grains de l'aggloméré solide puissent être accessibles à l'azote pendant toute la réaction de nitruration, c'est-à-dire que la masse conserve pendant toute la durée du traitement une porosité suffisante. Le rôle de l'agent porogène est absolument crucial pour la mise en œuvre à l'échelle industrielle du procédé de la présente invention. En effet, c'est grâce à cet agent porogène que l'on peut opérer sur des quantités importantes de matière qu'on ne peut nitrurer en l'absence de cet agent ou très imparfaitement en présence de quantités trop faibles de cet agent comme le démontrent les exemples donnés plus loin.

Bien entendu, les matériaux éliminables à chaud qui viennent d'être cités sont des substances carbonées qui par pyrolyse en atmosphère d'azote conduisent à un résidu de carbone. Cette quantité de carbone qui s'ajoute au carbone introduit dans la pâte initiale doit être prise en compte pour le calcul des réactifs soumis à la réaction de nitruration.

Une variante intéressante entrant dans le cadre de l'invention consiste à soumettre à la nitruration des mélanges d'argiles (ou d'autres matériaux silico-alumineux) et de carbone très poreux qui agit en même temps comme source de carbone et comme agent porogène.

Une telle source de carbone, dont le prix de revient est inférieur à celui du charbon de bois peut être facilement obtenue par cokéfaction entre 900 et 1 000 °C d'un mélange de houille, de sciure de bois et de brai de houille selon les indications du brevet FR-B-1 375 252.

La préparation des éléments agglomérés mis en œuvre dans le procédé de l'invention peut s'effectuer comme suit :

On réalise, à partir des trois matériaux susmentionnés soigneusement broyés à l'état de poudre fine, c'est-à-dire le produit silico-alumineux, le carbone et l'agent porogène, un mélange aussi intime et homogène que possible. La composition pondérale de ce mélange dépend du produit silico-alumineux en ce sens qu'il doit contenir une quantité de carbone au moins égale et, de préférence, légèrement supérieure à la quantité théorique comme calculée d'après l'équation réactionnelle :

$$(Z/2)Al_2O_3 + (6 - Z)SiO_2 + ((8 - Z)/2)N_2 + (12 - (3/2)Z)C \longrightarrow Si_{6-Z}Al_ZN_{8-Z}O_Z + (12 - (3/2)Z)CO \quad (1)$$

Z pouvant varier de 1 à 4.

Le pourcentage d'agent porogène éliminable à chaud doit être choisi de façon que la porosité de la masse soumise à la nitruration soit suffisante pour une bonne accessibilité au gaz de l'ensemble des particules solides. Si cette proportion est par contre trop élevée, la tenue mécanique des échantillons traités laisse à désirer en raison de leur trop grande porosité. Dans la plupart des cas, une proportion d'agent porogène comprise entre 8 et 18 % en poids par rapport au poids total de matière silico alumineuse, de carbone et d'agent porogène sera satisfaisante.

Pour fixer les idées, si on se propose par exemple de traiter une argile, avec du noir de carbone et de la sciure de bois comme agent porogène, et en supposant que cette argile contienne 46,2 % en poids de $SiO_2$ et 33,6 % en poids de $Al_2O_3$, la quantité théorique de carbone nécessaire au traitement de 100 g d'argile selon l'équation réactionnelle (1) étant de 22,56 g, on utilisera un excès de carbone d'environ 20 % en poids (soit 5 g) par rapport à cette quantité. Le pourcentage de sciure de bois à ajouter au mélange pourra être choisi entre 8 et 18 %, comme indiqué ci-dessus. En dessous de 8 %, la porosité de la masse soumise à la nitruration demeure insuffisante. Pour des pourcentages de sciure supérieurs à 18 % l'empâtage de l'argile se fait difficilement et la tenue mécanique des échantillons après traitement est mauvaise.

On ajoute au mélange des solides pulvérulents précités une quantité d'eau suffisante pour former une pâte à partir de laquelle on réalisera les éléments qui seront soumis au traitement de nitruration. Ces éléments peuvent avoir toute forme appropriée. Ce peut être, par exemple, des rondins cylindriques ou des briques parallélipipédiques, mis en forme par léger pressage et pouvant, selon le volume des fours de nitruration utilisés, correspondre à des quantités de pâte variant de 100 g à plusieurs kg par élément.

Ces éléments, sous forme de rondins cylindriques ou de briques parallélipipédiques, peuvent être traités, par exemple, dans les conditions précisées ci-après, soit dans des fours tubulaires horizontaux (pour les petits échantillons cylindriques), soit dans des fours à cloche de grandes dimensions où sont empilées les briques en quantité telle que l'on puisse fabriquer plusieurs centaines de kg par opération.

Les rondins ou les briques subissent d'abord, avant leur introduction dans le four de nitruration, une opération de séchage, par exemple dans une étuve à 110 °C pendant 10 à 12 heures. Ils sont ensuite soumis au traitement de nitruration dans un four, parcouru par un courant d'azote sec dont le débit est fonction du volume du four utilisé.

Lorsqu'on utilise un four à chauffage rapide, l'opération de chauffage est effectuée généralement en deux étapes : tout d'abord une montée régulière de température, par exemple jusqu'à 800 °C environ avec maintien de cette température pendant 2 à 3 heures pour éliminer l'eau de constitution de l'argile. Après ce palier on monte régulièrement la température jusqu'à 1 400 °C au moins et 1 600 °C au plus, de préférence jusqu'à 1 500 °C et on maintient cette température pendant 9 à 25 heures, de préférence pendant 15 heures. Si on utilise un four à chauffage lent, comme un four industriel de grande taille, il peut être superflu d'observer le palier indiqué, l'eau de constitution de l'argile s'éliminant au cours de la lente montée en température du four.

On laisse ensuite refroidir le four jusqu'à la température ambiante en maintenant toujours l'atmosphère d'azote.

La charge d'éléments résultant de cette cuisson nitrurante se présente, après refroidissement, sous

forme de rondins ou de briques de grande porosité très faciles à réduire en poudre par broyage. Cette poudre, très homogène, est constituée, comme les exemples décrits ci-après le montreront, par des petits grains de sialon β' de la formule $Si_{6-Z}Al_ZN_{8-Z}$ à l'exclusion de toute quantité notable d'une autre phase cristallisée décelable aux rayons X. Par l'expression « quantité notable », on veut dire une quantité supérieure à 1 % en poids. Ce résultat montre l'avantage du procédé de l'invention vis-à-vis des procédés antérieurs proposés pour l'obtention de sialons qui aboutissent toujours à des mélanges de phases, qu'il s'agisse de pressage à chaud des mélanges de nitrure de silicium et d'alumine ou de la nitruration du kaolin par l'ammoniac.

Il importe de souligner à nouveau le rôle primordial de l'agent porogène introduit dans les masses traitées selon le procédé de l'invention : grâce à lui, la porosité de la masse pendant tout le traitement permet à la réaction gaz-solide de s'effectuer complètement même sur des éléments de grandes dimensions comme en témoigne l'homogénéité de la poudre obtenue après broyage des éléments nitrurés. Il en résulte que, contrairement à tous les procédés décrits à ce jour pour produire des sialons, le procédé de l'invention est facilement adoptable à l'échelle industrielle, la production de ce sialon n'étant plus limitée que par la capacité du four utilisé.

Dans les exemples d'illustration du procédé décrits plus loin, on fait principalement état de l'utilisation de fours tubulaires à l'échelle des fabrications de laboratoire et de four cloche pour la production à l'échelle semi-industrielle, mais, bien entendu, il est possible d'apporter des modifications à ces techniques afin d'apporter des améliorations à l'économie du procédé. En particulier, on peut transformer les opérations discontinues décrites ci-dessus en opérations continues qui sont généralement préférées pour une exploitation industrielle. Ainsi, la nitruration en continu peut être réalisée dans un four tubulaire horizontal (four tunnel) où les masses à nitrurer (rondins cylindriques ou briques parallélipipédiques) sont introduites à une extrémité du four et poussées, à une cadence convenable, vers l'autre extrémité. Ce four tunnel, parcouru en permanence par un débit d'azote convenable, est aménagé pour que ses différentes zones soient maintenues à des températures permettant la réalisation du cycle de traitement désiré, tel qu'il a été indiqué plus haut. Bien que les masses à nitrurer conservent une relativement bonne tenue mécanique tout au long de la nitruration, il est cependant utile pour éviter de les détériorer par attrition, de les placer sur un berceau en matière réfractaire qui assurera lui-même le déplacement sur la sole du four.

Une autre possibilité intéressante pour la mise en œuvre du procédé de nitruration en continu est l'utilisation d'un four tubulaire vertical dans lequel on introduit par le haut la matière à traiter sous forme de boulets sphériques de 1 à 5 cm de diamètre, obtenus soit au drageoir (petites billes), soit par moulage (pour les boulets plus gros) à partir de la pâte d'argile, de carbone et d'agent porogène. Ces boulets, préalablement étuvés à 110 °C, sont introduits au sommet du four vertical et soumis, au cours de leur descente par gravité, à l'atmosphère d'azote avec le même programme de chauffage que celui indiqué précédemment. Bien entendu, ce four vertical comporte à son sommet et à sa base des sas destinés à éviter les rentrées d'air pendant les opérations de chargement et de défournement. On peut également alimenter ce type de four vertical par des petits cylindres (d'environ 2 cm de diamètre, sur 2 cm de longueur) ou des petits cubes (d'environ 2 cm d'arête) obtenus en faisant passer la pâte d'argile, de carbone et d'agent porogène dans une boudineuse munie d'un couteau automatique à la sortie de la filière qui permet de tronçonner les éléments à la longueur désirée.

Les matériaux obtenus selon l'invention et qui peuvent être, comme on vient de l'indiquer, de natures très diverses ont tous en commun cette caractéristique d'avoir un prix de revient relativement bas du fait, d'une part du faible coût des matériaux mis en œuvre, et d'autre part, de la facilité du traitement de nitruration qui peut être effectué sur des échantillons de masse importante comme l'exigent les conditions d'une production industrielle.

Ces matériaux nitrurés peuvent être utilisés dans la préparation de matériaux réfractaires spéciaux, soit à l'état de pisés, soit à l'état de pièces agglomérées avec d'autres matériaux réfractaires, soit à l'état de pièces compactes obtenues par frittage. Les poudres de produit sialon obtenu selon le procédé de l'invention peuvent en effet très facilement subir une opération de densification par frittage simplement en compactant ces poudres par pressage à froid ou par coulée en barbotine et en réalisant ensuite le frittage par chauffage sans pression.

Il est important de noter que la densification de ces poudres par frittage est incomparablement plus facile que l'opération habituelle qui consiste à faire réagir, au moment du frittage, les mélanges de poudres devant former le sialon. Lorsqu'on soumet en effet au frittage des poudres déjà constituées de grains de sialon, ces derniers se frittent très rapidement dès que leur température de ramollissement est atteinte. Le fait de pouvoir ainsi obtenir rapidement un produit fritté, à la température minimum de ramollissement des grains présente en particulier l'intérêt d'éviter la décomposition du sialon.

Les exemples non limitatifs qui suivent sont donnés en vue d'illustrer l'invention.

## Exemple 1

Ce premier exemple se rapporte à la nitruration d'une argile kaolinitique de grande surface spécifique (50 $m^2/g$) et dont la composition est la suivante, exprimée en pourcentages pondéraux, à l'état cru ; 46,2 % $SiO_2$, 33,6 % $Al_2O_3$, 1,75 % $Fe_2O_3$, 1,85 % $TiO_2$, 0,48 % CaO, 0,15 % MgO, 0,04 % $Na_2O$ et 0,07 %

$K_2O$. Cette argile présente une perte au feu de 15,3 %.

Cette argile, en poudre fine, est intimement mélangée à de la sciure de bois et du noir de carbone dans les proportions pondérales suivantes : 65,2 % d'argile, 18,1 % de noir de carbone et 16,7 % de sciure de bois. En ajoutant à ce mélange environ 30 % d'eau, on forme une pâte que l'on malaxe très soigneusement et à laquelle on donne, simplement à la main, la forme d'un cylindre de 1,5 cm de diamètre et de 5 cm de longueur. Ce rondin cylindrique est séché à l'étuve à 110 °C pendant 12 heures, puis placé dans un tube d'alumine frittée chauffé par un four tubulaire à baguettes de carbure de silicium permettant d'atteindre une température maximum de 1 450 °C à l'emplacement du rondin.

L'opération de nitruration effectuée sur ce rondin par un courant d'azote pur et sec (débit 30 l/h) comporte deux étapes :

1. une montée régulière (120 °C/h) de l'ambiance jusqu'à 800 °C et maintien de la température à 800 °C pendant 3 heures pour déshydrater complètement l'argile,

2. une montée régulière (120 °C/h) de température de 800 °C à 1 400 °C et maintien de cette température pendant 25 heures. On coupe ensuite le courant d'alimentation du four tout en maintenant le débit d'azote pendant le refroidissement jusqu'à la température ordinaire.

Le rondin ainsi traité, de couleur gris clair, d'aspect très homogène est suffisamment poreux pour être facile à réduire en poudre par broyage. Cette poudre est soumise à un examen par diffraction X avec anticathode de cuivre et filtre de nickel. L'enregistrement du spectre obtenu présente un ensemble de raies correspondant presque exclusivement à la solution solide hexagonale de sialon β'. Quelques raies supplémentaires larges et très peu intenses correspondent pour les unes au corindon (à l'état de traces) et pour les autres à la phase polytype désignée habituellement par le symbole 15 R. (Cette dernière également à l'état de traces.)

En utilisant les neuf premières raies dont le pointé est le plus précis sur l'enregistrement du spectre précédent, on calcule sur ordinateur les paramètres du sialon β' obtenu et on trouve :

$a = 7{,}685 \pm 0{,}010$ Å $C = 2{,}975 \pm 0{,}009$ Å
Volume de la maille : $152{,}2 \pm$ Å$^3$

Exemple 2

A partir des mêmes matériaux que dans l'exemple 1, on prépare un rondin comportant les mêmes proportions d'argile et de noir de carbone mais sans ajouter de sciure de bois. Ce rondin, soumis exactement au même traitement que dans l'exemple 1, conduit, après nitruration, à un produit dans lequel l'analyse par diffraction X permet d'identifier surtout de la mullite $2\,SiO_2 \cdot 3\,Al_2O_3$ à côté de laquelle apparaissent de faibles quantités d'oxynitrure de silicium $Si_2N_2O$ et de nitrure de silicium $Si_3N_4\beta$.

Ce résultat, tout-à-fait différent de celui de l'exemple 1 met parfaitement en évidence le rôle crucial de l'agent porogène éliminable à chaud (en l'occurence la sciure de bois). En l'absence de sciure, la masse traitée demeure pratiquement imperméable à l'azote et la réaction de nitruration ne se produit qu'à la surface de l'échantillon dont l'intérieur se transforme en mullite.

Exemple 3

A partir des mêmes matériaux que dans l'exemple 1, on prépare un rondin comportant 75 % d'argile, 20 % de noir de carbone et 5 % de sciure de bois. Ce rondin soumis exactement au même traitement que dans l'exemple 1, conduit après nitruration à un produit dont le spectre de diffraction X est très analogue à celui obtenu dans l'exemple 1. La phase sialon présente pratiquement les mêmes paramètres que celle de l'exemple 1, toutefois, les proportions de corindon et de phase 15 R sont apparemment légèrement plus importantes. On peut expliquer cette légère différence entre les résultats des exemples 1 et 3 par le fait que la proportion de la sciure de bois (l'agent porogène) qui n'est que de 5 % dans l'exemple 3 est un peu trop faible pour une bonne accessibilité de l'azote dans l'échantillon à nitrurer. C'est pourquoi la proportion de 8 % d'agent porogène a été considérée comme un minimum pour la suite des essais.

Exemple 4

A partir de cet exemple et pour la plupart de ceux qui suivront, la température choisie pour le palier de nitruration fut portée à 1 500 °C grâce à l'utilisation d'un four à résistance de platine. Bien que l'exemple 1 ait démontré qu'on peut effectuer une préparation correcte de sialon β' en réalisant la nitruration à 1 400 °C pendant 25 heures, il apparaissait intéressant d'essayer de diminuer le temps de traitement en augmentant la température.

D'autre part, en raison de certains inconvénients de la sciure de bois (en particulier sur la tenue des échantillons nitrurés qui ont tendance à présenter un aspect feuilleté) on lui a substitué avec avantage la poudre obtenue par broyage fin de noyaux d'olives.

Le premier exemple de cette série (exemple 4) se rapporte à la nitruration de la même argile que précédemment (exemple 1) qu'on mélange avec la poudre de noyaux d'olives et le noir de carbone dans

les proportions suivantes : 70 % d'argile, 14 % de noir de carbone et 16 % de noyaux d'olives. L'empâtage avec l'eau permet de réaliser le même type de rondin nitruré suivant le même programme que dans l'exemple 1 à cette différence près que :

1. la température du palier de nitruration est de 1 500 °C,
2. le maintien de ce palier est de 15 heures.

L'examen par diffraction X du produit obtenu montre qu'il s'agit essentiellement de la phase sialon β' de mêmes paramètres que ceux indiqués dans l'exemple 1. A côté de cette phase, on ne décèle pratiquement pas de corindon, mais une légère proportion de phase 15 R, nettement plus élevée cependant que dans le cas de l'exemple 1.

Exemple 5

Dans cet exemple, les conditions de l'exemple 4 sont exactement reproduites à la différence près que le palier de nitruration est seulement de 12 heures.

Le spectre X du produit obtenu est pratiquement le même que dans l'exemple 4 à cela près que la quantité de phase 15 R est plus faible.

Exemple 6

Mêmes conditions que dans l'exemple 4 à ceci près que le palier de nitruration est de 9 heures. Le spectre X du produit obtenu est encore très semblable aux précédents mais la phase 15 R ne se révèle plus qu'à l'état de traces tandis qu'apparaît, en quantité très faible d'ailleurs, de la mullitte.

Exemple 7

Mêmes conditions que dans l'exemple 4, à ceci près que le palier de nitruration est de 6 heures. Le spectre X du produit obtenu est encore analogue aux précédents, mais si la phase 15 R a à peu près disparu, la phase mullite par contre est un peu plus importante que dans le cas du produit de l'exemple 6.

Exemple 8

Mêmes conditions que dans l'exemple 4, à ceci près que le palier de nitruration n'est plus que de 3 heures.

Le spectre X du produit obtenu est cette fois nettement différent des précédents. Si le sialon β' est toujours présent et ses paramètres toujours les mêmes que ceux indiqués dans l'exemple 1, il est accompagné de quantités importantes d'autres phases, principalement de la mullite, du corindon, et de la cristoballite. Ainsi, ces phases qui apparaissent lorsque la durée de nitruration est relativement courte et qu'on ne décèle plus pour des durées de nitruration nettement plus importantes, seraient à considérer comme des phases intermédiaires. Leur caractérisation met en évidence la complexité du phénomène de la nitruration dont la réaction 1 ne représente qu'un schéma global très simplifié.

D'après les résultats des essais relatés dans les exemples 4 à 8, il apparaît que le temps minimum pour nitrurer le rondin considéré à 1 500 °C et le transformer en sialon β' (ne contenant comme impureté qu'un peu de phase 15 R) est d'environ 10 heures. Les durées inférieures conduisent à des réactions incomplètes laissant subsister, à côté du sialon, les phases intermédiaires. Pour des durées supérieures à 10 heures, les diagrammes X des poudres obtenues ne permettent pas de faire une distinction entre les produits, cependant des différences se manifestent après frittage des poudres ; il a été observé que plus la poudre de sialon a fait l'objet d'une préparation prolongée (durée du palier à 1 500 °C), plus elle conduit, après frittage, à des produits denses.

Exemple 9

Cet exemple est surtout destiné à montrer que la prolongation de la durée du palier de nitruration à 1 500 °C n'entraîne pas un début de décomposition du sialon.

En opérant exactement dans les mêmes conditions que pour les exemples précédents, on a simplement porté à 40 heures la durée du palier à 1 500 °C. Le spectre de rayons X du produit obtenu est le même que dans le cas de l'exemple 4 où le palier de nitruration n'était que de 15 heures. Le fait qu'il ne se soit pas formé de quantité plus importante de phase 15 R au bout de 40 heures prouve donc bien que le sialon formé est tout-à-fait stable à 1 500 °C.

Les exemples 10 et 11 sont destinés à montrer que d'autres argiles kaolinitiques, de compositions différentes de celles de l'argile utilisée pour la première série d'exemples sont également susceptibles d'être nitrurées à l'état de sialons β'.

Exemple 10

Un rondin de mêmes dimensions que dans l'exemple 1 a été fabriqué à partir d'une argile kaolinitique

d'une surface spécifique de 52,3 $m^2/g$ et dont la composition est la suivante, exprimée en pourcentages pondéraux à l'état cru : 43,03 % $SiO_2$, 35,75 % $Al_2O_3$, 0,95 % $Fe_2O_3$, 2,21 % $TiO_2$, 0,16 % MgO, traces de CaO, 0,2 % $Na_2O$, 0,08 % $K_2O$, 0,01 % MnO. Cette argile présente une perte au feu de 15,58 %.

Cette argile a été mélangée à du noir de carbone et à du noir de carbone et à de la poudre de noyaux d'olives dans les proportions pondérales suivantes : 70 % d'argile, 14 % de noir de carbone, et 16 % de poudre de noyaux d'olives.

Le rondin a été traité dans les mêmes conditions que celui de l'exemple 4. Le produit obtenu apparaît, d'après son spectre de rayons X, tout-à-fait semblable à celui de l'exemple 4 avec toutefois une teneur en phase 15 R nettement plus faible. Les deux argiles utilisées dans les exemples 1 et 10 se conduisent pratiquement de la même façon au cours du traitement de nitruration et l'une et l'autre conduisent à des sialons de bonne qualité.

Exemple 11

Un rondin de mêmes dimensions que dans l'exemple 1 a été fabriqué à partir d'une argile kaolinitique dont la composition est la suivante, exprimée en pourcentages pondéraux à l'état cru : 55,7 % $SiO_2$, 40,2 % $Al_2O_3$, 1,05 % $Fe_2O_3$, 0,77 % $TiO_2$, 0,02 % CaO, 0,20 % MgO, 0,06 % $Na_2O$, 2,0 % $K_2O$. Cette argile présente une perte au feu de 12,0 %.

Cette argile a été mélangée à du noir de carbone et de la sciure de bois dans les proportions pondérales suivantes : 70 % d'argile, 14 % de carbone, 16 % de sciure de bois. Le rondin a été traité suivant le même programme que dans l'exemple 1 avec toutefois cette différence que le palier de nitruration a été de 25 heures à 1 500 °C.

L'examen par diffraction X du produit obtenu montre qu'il s'agit essentiellement de la phase sialon β', de mêmes paramètres que ceux indiqués dans l'exemple 1. Ne sont décelables comme phases supplémentaires que des traces infimes de corindon et une très légère proportion de phase 15 R.

Exemple 12

Cet exemple se rapporte à la nitruration d'un mélange intime de silice très fine et particulièrement réactive avec du corindon broyé finement dans les proportions correspondant sensiblement identiques à celles des argiles utilisées dans les exemples précédents. Un rondin de mêmes dimensions que dans l'exemple 1 a été réalisé à partir d'un mélange intime comportant en poids : 38 % de silice fine, 32 % de corindon finement broyé, 14 % de noir de carbone et 16 % de sciure de bois. La nitruration du rondin a été effectuée selon le même programme que dans l'exemple 1 à cette différence près que le palier de 25 heures a été effectué à 1 500 °C.

L'examen par diffraction X du produit obtenu montre qu'à côté de la phase sialon β' de mêmes paramètres que ceux indiqués dans l'exemple 1, il existe une proportion notablement plus importante de corindon que dans les produits obtenus par nitruration de l'argile.

Exemple 13

Un rondin de mêmes dimensions que dans l'exemple 1, a été réalisé à partir d'un mélange intime comportant, en poids : 40 % de silice fine, 30 % de corindon finement broyé, 14 % de noir de carbone et 16 % de poudre de noyaux d'olives. La nitruration de ce rondin a été effectuée selon le même programme que dans l'exemple 1, à cette différence près que le palier de nitruration a été de 15 heures à 1 500 °C.

L'examen par diffraction X du produit obtenu, assez semblable à celui de l'exemple précédent fait apparaître, à côté du sialon β' une proportion notable de corindon et un peu d'oxynitrure de silicium $Si_2ON_2$.

Les exemples précédents 12 et 13 sont principalement destinés à illustrer le fait qu'en soumettant à la nitruration des mélanges de silice et d'alumine dans les mêmes proportions que ces deux oxydes se trouvent combinés dans l'argile, on n'obtient pas du tout les mêmes résultats qu'en utilisant l'argile : le sialon β' se forme encore mais très incomplètement puisque le produit obtenu contient des proportions importantes de corindon et éventuellement un peu d'oxynitrure de silicium.

Exemple 14

Cet exemple décrit une forme de réalisation à l'échelle pilote du procédé faisant l'objet de la présente invention. En utilisant le même type d'argile que dans l'exemple 1, on prépare un mélange intime contenant en poids : 70 % d'argile, 14 % de noir de carbone, et 16 % de poudre de noyaux d'olives. On façonne, à partir de ce mélange empâté avec de l'eau, des briques parallélipipédiques qui sont moulées sous une pression d'environ 800 $kg/cm^2$ puis séchées à l'étuve à 110 °C pendant une dizaine d'heures. Les dimensions de ces briques après séchage sont les suivantes : 230 × 115 × 40 mm.

Ces briques sont placées sur la sole M d'un four cloche représenté schématiquement sur la figure unique annexée.

L'essai relatif à cet exemple porte sur une masse de 250 kg de briques mais le four utilisé d'un volume

intérieur de 0,8 $m^3$ est capable de traiter environ 500 kg de briques.

La sole M du four est mobile verticalement, en position basse on peut y placer l'empilement des briques à traiter et remonter ensuite cette sole à la base du four. L'azote arrive en A, dans le compartiment supérieur du four et pénètre à travers le réfractaire par des canaux C ménagés dans la voûte du four ; les gaz ($N_2$, CO) s'échappent du four par la canalisation S. Des résistances en molybdène R disposées le long des parois intérieures du four permettent le chauffage de la charge. L'étanchéité du four est assurée par un ensemble de joints hydrauliques non figurés sur le schéma. Le four parcouru par un débit d'azote de 20 $m^3$/heure est mis en chauffage de façon à réaliser une montée régulière de température des briques de l'ambiante à 1 500 °C en 20 heures. Cette température de 1 500 °C est maintenue constante pendant 40 heures et le courant de chauffage étant coupé, le four se refroidit lentement sous courant d'azote.

Les briques ainsi traitées présentent après refroidissement une couleur gris clair ; elles sont d'apparence très homogène dans toute la masse et leur tenue est suffisamment bonne pour qu'on puisse les manipuler sans les briser. Leur porosité est cependant telle que leur broyage est très facile.

L'examen par diffraction X de la poudre obtenue par broyage de ces briques (quel que soit l'endroit du prélèvement, en surface ou au cœur de la brique) montre qu'il s'agit du même produit que dans l'exemple 4, c'est-à-dire, essentiellement du sialon β' avec un peu de phase 15 R et des traces infimes de corindon.

L'intérêt de cet exemple est la démonstration qu'il est possible de réaliser sur une masse importante de briques de dimensions appréciables une nitruration aussi bonne que sur les petits rondins utilisés dans les essais de laboratoire. On peut donc en conclure qu'en une seule opération il est possible de fabriquer plusieurs centaines de kilos de sialon.

Exemple 15

Ce dernier exemple est simplement destiné à montrer l'aptitude au frittage de la poudre de sialon β' obtenue par broyage prolongé du produit obtenu dans l'exemple 4. On a réalisé de petites pastilles de 35 mm de diamètre et de 8 mm d'épaisseur par pressage de la poudre humectée par un peu d'eau sous 1,6 T/$cm^2$. Après séchage à l'étuve (110 °C quelques heures) la pastille est placée dans un four tubulaire maintenu à la température choisie pour le frittage, en atmosphère d'azote et pendant une durée bien déterminée. Après cet essai, la pastille est soumise à un examen radiocristallographique, à une mesure de porosité et à une mesure de densité. Suivant les durées et température de frittage, les résultats obtenus ont été ceux rapportés dans le tableau 1.

Tableau 1

| | | | |
|---|---|---|---|
| Porosité % | 12,6 | 32 | 15 |
| Densité | 2,62 | 2,16 | 2,57 |
| Durée du frittage (heure) | 1 | 1/2 | 1/2 |
| Température de frittage (°C) | 1 600 | 1 600 | 1 650 |

Ces pastilles frittées présentent comme on pouvait s'y attendre une porosité qui diminue et une densité qui augmente soit avec la durée, soit avec la température de frittage. Elles ont d'autre part, une bonne tenue mécanique, et d'après l'analyse radiocristallographique, sont constituées par de la phase sialon β' exempte de corindon et ne contenant qu'un peu de phase 15 R (dans des proportions très semblables à celles de la poudre initiale).

**Revendications**

1. Procédé de préparation d'un produit comprenant une solution solide d'oxyde d'aluminium dans du nitrure de silicium par chauffage sous atmosphère d'azote, à des températures comprises dans la gamme de 1 400 à 1 600 °C, d'une matière contenant de la silice et de l'alumine, mélangée à du carbone ou à une matière carbonée, jusqu'à obtention de ladite solution solide, caractérisé en ce que :

(a) on forme une pâte comprenant un matériau silico-alumineux et soit (i) du carbone et un agent porogène constitué de fines particules d'une matière ligneuse, soit (ii) du carbone très poreux servant à la fois de source de carbone et d'agent porogène,

(b) on conforme la pâte obtenue dans l'étape (a) en éléments conformés,

(c) on sèche les éléments conformés produits dans l'étape (b), et

(d) on chauffe les éléments conformés séchés résultant de l'étape (c) sous atmosphère d'azote aux températures sus-mentionnées et pendant une durée suffisante pour former un produit sialon β' contenant, comme seule phase cristalline présente en une proportion supérieure à 1 % en poids, une solution solide de type sialon β' répondant à la formule $Si_{6-Z}Al_ZN_{8-Z}O_Z$ où Z = 1 à 4.

2. Procédé selon la revendication 1, caractérisé en ce que la durée de chauffage est comprise entre 9 et 25 heures environ.

3. Procédé selon la revendication 1, caractérisé en ce que l'agent porogène constitue de 8 à 18 % en poids du poids total de matière silico-alumineuse, de carbone et d'agent porogène.

4. Procédé selon la revendication 1, caractérisé en ce que l'agent porogène est choisi parmi la sciure de bois et une poudre fine obtenue par broyage de noyaux d'olives.

5. Procédé selon la revendication 1, caractérisé en ce que la matière silico-alumineuse est une argile kaolinitique.

6. Procédé selon la revendication 1, caractérisé en ce que le total du constituant carbone et du carbone contenu dans la matière ligneuse représente au moins la quantité stœchiométrique nécessaire pour satisfaire l'équation :

$$(Z/2)Al_2O_3 + (6-Z)SiO_2 + ((8-Z)/2)N_2 + (12-(3/2)Z)C \longrightarrow Si_{6-Z}Al_ZN_{8-Z}O_Z + (12-(3/2)Z)CO,$$

où Z = 1 à 4.

7. Procédé selon la revendication 6, caractérisé en ce que le carbone est présent en un léger excès par rapport à la quantité stœchiométrique nécessaire.

8. Procédé selon la revendication 6, caractérisé en ce que le carbone est sous forme de noir de carbone.

## Claims

1. A method of preparing a product comprising a solid solution of aluminium oxide in silicon nitride by heating, under a nitrogen atmosphere, at temperatures comprised in the range of 1 400 to 1 600 °C, silica- and alumina-containing material mixed with carbon or carbon-containing material, until obtaining said solid solution, characterised by :

(a) preparing a paste comprising a silico-aluminous material and either (1) carbon and a pore-generating agent consisting of fine particles of a ligneous material or (2) very porous carbon acting both as carbon source and as pore-generating agent,

(b) shaping the paste obtained in step (a) into shaped elements,

(c) drying the shaped elements produced in step (b) and

(d) heating the dried shaped elements obtained in step (c) under a nitrogen atmosphere at the above-mentioned temperatures and for a period sufficient for forming a β'-sialon product containing, as the single cristalene phase present in an amount higher than 1 % by weight, a solid solution of the β'-sialon type having the formula $Si_{6-Z}Al_ZN_{8-Z}O_Z$ where Z = 1 to 4.

2. A method according to Claim 1, characterised in that the duration of heating is between 9 and 25 hours.

3. A method according to claim 1, characterised in that the pore-generating agent constitutes from 8 to 18 % by weight of the total weight of silico-aluminous material, carbon and pore-generating agent.

4. A method according to claim 1, characterised in that the pore-generating agent is selected among saw-dust and a fine powder obtained by crushing olive stones.

5. A method according to claim 1, characterised in that the silico-aluminous material is a kaolinitic clay.

6. A method according to claim 1, characterised in that the total of the carbon constituent and of the carbon contained in the ligneous material is at least equal to the stoechiometric quantity required by the equation :

$$(Z/2)Al_2O_3 + (6-Z)SiO_2 = ((8-Z)/2)N_2 + (12-(3/2)Z)C \longrightarrow Si_{6-Z}Al_ZN_{8-Z}O_Z + (12-(3/2)Z)CO,$$

where Z = 1 to 4.

7. A method according to claim 6, characterised in that the carbon is present in slight excess with respect to the required stoechiometric quantity.

8. A method according to claim 6, characterised in that the carbon is in the form of carbon black.

## Ansprüche

1. Verfahren für die Herstellung eines Produktes mit einer festen Lösung aus Aluminiumoxyd in Siliciumnitrit durch Wärmebehandlung in einer stickstoffhaltigen Atmosphäre bei Temperaturen im Bereich von 1 400 bis 1 600 °C aus einem Stoff, der Siliciumdioxyd und Aluminiumoxyd, gemischt mit Kohlenstoff oder einer Kohlenstoffhaltigen Materie enthält, bis die genannte feste Lösung erhalten wird, dadurch gekennzeichnet, daß

(a) man eine Paste formt, die eine tonerdehaltige Silikatmasse enthält, sei es (i) aus Kohlenstoff und einem porenbildenden Mittel, bestehend aus feinen Partikeln eines holzartigen Stoffes, sei es (ii) aus einem starkporigen Kohlenstoff, der zugleich als Quelle für den Kohlenstoff und als porenbildendes Mittel dient,

(b) man die nach dem Schritt (a) erhaltene Masse in angepaßte Teile formt,

(c) man die angepaßten, im Schritt (b) geformten Teile trocknet und

(d) man diese geformten und gemäß dem Schritt (c) getrockneten Teile in der stickstoffhaltigen Atmosphäre bei den zuvor erwähnten Temperaturen erwärmt und nach einer ausreichenden Dauer ein Produkt Sialon β' bildet, das als einzige kristalline Phase mit einem Gewichtsverhältnis von mehr als 1 % eine feste Lösung des Typs Sialon β' bildet, entsprechend der Formel $Si_{6-Z}Al_ZN_{8-Z}O_Z$ mit Z = 1-4.

2. Verfahren nach Anspruch 1, dadurch gekennzeichnet, daß die Dauer der Wärmebehandlung zwischen 9 und 25 Stunden beträgt.

3. Verfahren nach Anspruch 1, dadurch gekennzeichnet, daß das porenbildende Mittel aus 8-18 Gew.% des gesamten Gewichtes von der Tonerde-Silikatmasse, dem Kohlenstoff und dem porenbildenden Mittel besteht.

4. Verfahren nach Anspruch 1, dadurch gekennzeichnet, daß das porenbildende Mittel zwischen Sägespänen und dem feinen Pulver gewählt wird, das bei der Zerkleinerung von Olivenkernen erhalten wird.

5. Verfahren nach Anspruch 1, dadurch gekennzeichnet, daß die Tonerde-Silikatmasse ein kaolinitischer Ton ist.

6. Verfahren nach Anspruch 1, dadurch gekennzeichnet, daß die Summe des Bestandteils Kohlenstoff und der Kohlenstoff enthaltenden holzartigen Masse wenigstens die stöchiometrisch notwendige Menge aufweist, um folgender Gleichung zu genügen :

$$(Z/2)Al_2O_3 + (6 - Z)\ SiO_2 + ((8 - Z)/2)N_2 + (12 - (3/2)Z)C \longrightarrow Si_{6-Z}Al_ZN_{8-Z}O_Z + (12 - (3/2)Z)CO,$$

wobei Z = 1-4 ist.

7. Verfahren nach Anspruch 6, dadurch gekennzeichnet, daß der Kohlenstoff in einem leichten Überschuß im Verhältnis zur stöchiometrisch notwendigen Menge vorhanden ist.

8. Verfahren nach Anspruch 6, dadurch gekennzeichnet, daß der Kohlenstoff in Form schwarzen Kohlenstoffes vorliegt.

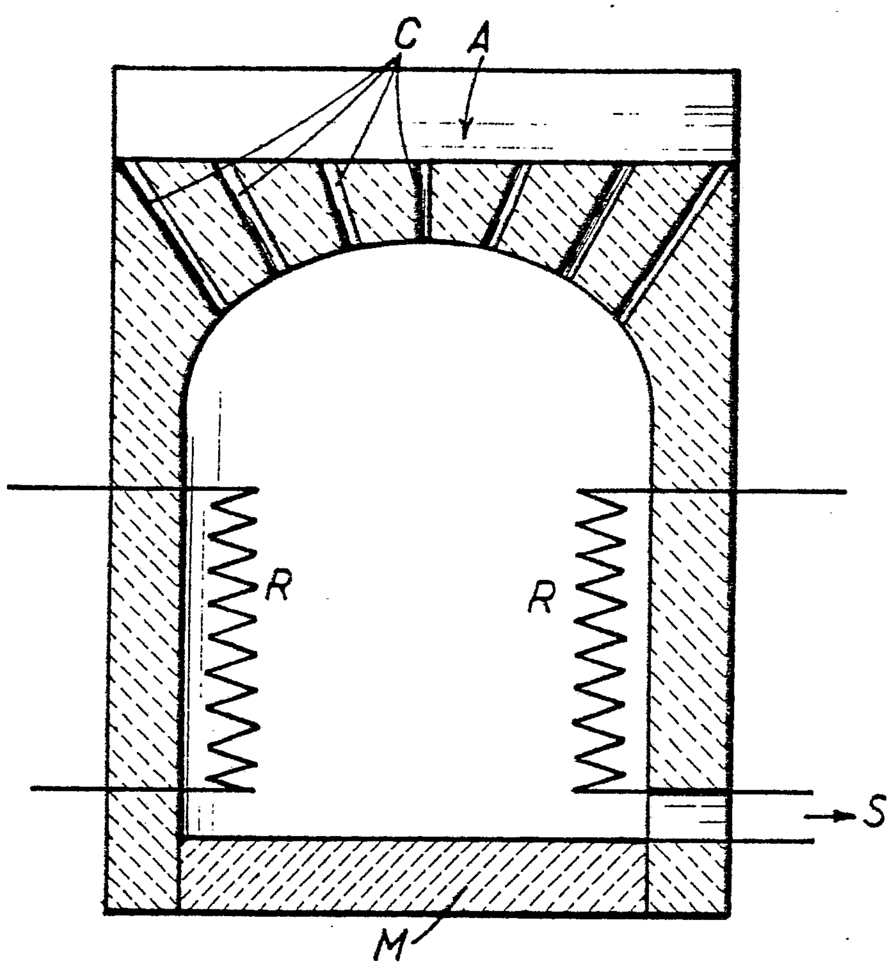
C
A
R
R
S
M